# FASCICULE DE BREVET EUROPEEN

(11) **EP 0 562 940 B1**
(45) Date de publication et mention de la délivrance du brevet: **06.10.1999**
(21) Numéro de dépôt: 93400733.7
(22) Date de dépôt: 22.03.1993
(51) Int. Cl.: G08G 3/02

(54) **Procédé de contrôle de la navigation maritime**
Seefahrtprüfungsverfahren
Marine navigation control method

(30) Priorité: 27.03.1992 FR 9203714
(43) Date de publication de la demande: 29.09.1993
(73) Titulaire: THOMSON-CSF, 75008 Paris (FR)
(72) Inventeur: Janex, Albert, F-92402 Courbevoie Cedex (FR)
(74) Mandataire: Chaverneff, Vladimir

(56) Documents cités:
- EP-A- 0 379 198
- FR-A- 2 420 799
- FR-A- 2 601 168
- FR-A- 2 661 536
- GB-A- 1 310 679

## Description

La présente invention se rapporte à un procédé de contrôle de la navigation maritime.

Malgré tous les moyens de détection et de contrôle dont on dispose actuellement, la sécurité du trafic maritime dans des zones à forte densité de trafic, en particulier dans les zones côtières et portuaires, n'est pas toujours bien assurée.

Pour assurer cette sécurité, il est important d'établir un moyen de communication sûr d'une part entre navires se trouvant dans une même zone, et d'autre part entre ces navires et un centre de contrôle de trafic maritime surveillant cette zone.

Il existe actuellement divers moyens de communication entre véhicules et/ou de localisation de véhicules.

Pour ce qui est du trafic terrestre, on a recours aux communications par radiotéléphone, avec adressage codé du destinataire, mais de tels systèmes ne permettent pas à l'utilisateur de localiser son correspondant.

Des équipements plus complexes (du type GEOSTAR/LOCSTAR) permettent les communications et la localisation : une station centrale communique avec un mobile via deux circuits passant chacun par un satellite. Le temps aller-retour nécessaire à l'échange de communications permet de déterminer les distances du mobile aux deux satellites, et donc de le localiser. Ce système associe adressage et localisation mais concentre les communications au niveau des satellites et exige des liaisons à longue portée.

En trafic aérien, le radar secondaire, en particulier en mode S, permet de communiquer avec un aéronef et d'en connaître simultanément la position et l'identité. Ce radar, de même que le système GEOSTAR/LOCSTAR, associe adressage et localisation. Le radar est mal adapté à l'acquisition d'adresses en milieu dense et exige une gestion lourde du trafic.

Plus récemment introduit, le concept d'ADS (Automatic Dependent Surveillance) permet de déterminer la position et l'identité d'un aéronef (qui transmet lui-même les informations nécessaires), et de communiquer avec lui. Ce système est performant, mais il ne permet pas aux intervenants de communiquer entre eux sans passer par le centre de contrôle.

Dans le domaine maritime, le seul moyen de communication mondialement utilisé actuellement est la radiocommunication, généralement en VHF, sans adressage. Les communications sont établies sur une fréquence, ou canal, prédéfinie par zone géographique. Ces moyens ne permettent pas à l'utilisateur de correspondre avec un correspondant précis.

Les communications par satellites (du type INMARSAT) commencent à être utilisées, et leur couverture est quasi mondiale grâce au nombre et à la position des satellites utilisables. Les liaisons sont établies par émission d'un code d'adresse du destinataire.

On connaît d'après les brevets français 2 601 168 et 2 661536 des systèmes permettant à des navires de se localiser mutuellement, en particulier dans un environnement dense (zone portuaire, ...) et de communiquer entre eux de façon adressée, sûre et non ambiguë, afin de prévenir des collisions. D'autre part, on connaît d'après le livre de A.S. TANENBAUM « Computer Networks », paru aux Editions Prentice-Hall en 1981, et en particulier d'après les pages 253 à 277, un procédé de transmission pour plusieurs émetteurs, dénommé « Slotted ALOHA ». Les procédés de contrôle de la navigation maritime connus de ces documents peuvent avoir une capacité insuffisante dans les zones de trafic naval très intense: il convient donc de trouver une solution permettant à un plus grand nombre de navires d'utiliser le canal commun des systèmes selon l'art antérieur sans dégradation notable du service rendu.

La présente invention a pour objet un procédé de contrôle de navigation maritime permettant de réduire les risques de collision tout en permettant à un centre de contrôle de superviser la totalité du trafic dans sa zone de surveillance et ainsi de réduire encore plus les risques de collision.

Le procédé de contrôle de l'invention, selon lequel chaque navire le mettant en oeuvre émet de façon répétitive, sur un canal commun à l'ensemble des navires concernés, des messages comportant des données relatives à sa position géographique absolue, à son cap et à sa vitesse, ainsi qu'un code d'identification quelconque servant d'adresse pour l'échange de messages, et reçoit des informations homologues des navires environnants, qu'il affiche par symboles sur un écran de type panoramique, le canal commun étant découpé dans le temps en périodes de base, ce procédé est caractérisé par le fait que, afin que le canal commun puisse être utilisé de façon optimale, la périodicité d'émission des messages par les navires est liée à la dynamique de la situation ambiante, et elle est fonction, pour chaque navire, d'au moins l'un des critères suivants : sa vitesse propre, la vitesse de ses voisins, la distance à ses voisins, sa manoeuvrabilité et celle de ses voisins, le temps à couvrir par ce navire avant le passage au plus près d'un navire voisin, et par le fait que le contrôle est supervisé par un centre de contrôle qui est équipé de moyens de communication utilisant ledit canal commun, et affiche sur un écran toutes les informations qu'il reçoit de tous les navires concernés se trouvant dans sa zone de surveillance, ainsi que tous les obstacles qui s'y trouvent, et que l'une des périodes de base est régulièrement réservée au centre de contrôle, pour lui permettre de s'adresser à l'ensemble ou à une partie des navires concernés.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme d'un dispositif équipant chaque navire, et d'un dispositif équipant le centre de contrôle, pour la mise en oeuvre du procédé de l'invention, et
- la figure 2 est une vue en plan d'un exemple d'écran du dispositif de visualisation des dispositifs de la figure 1.

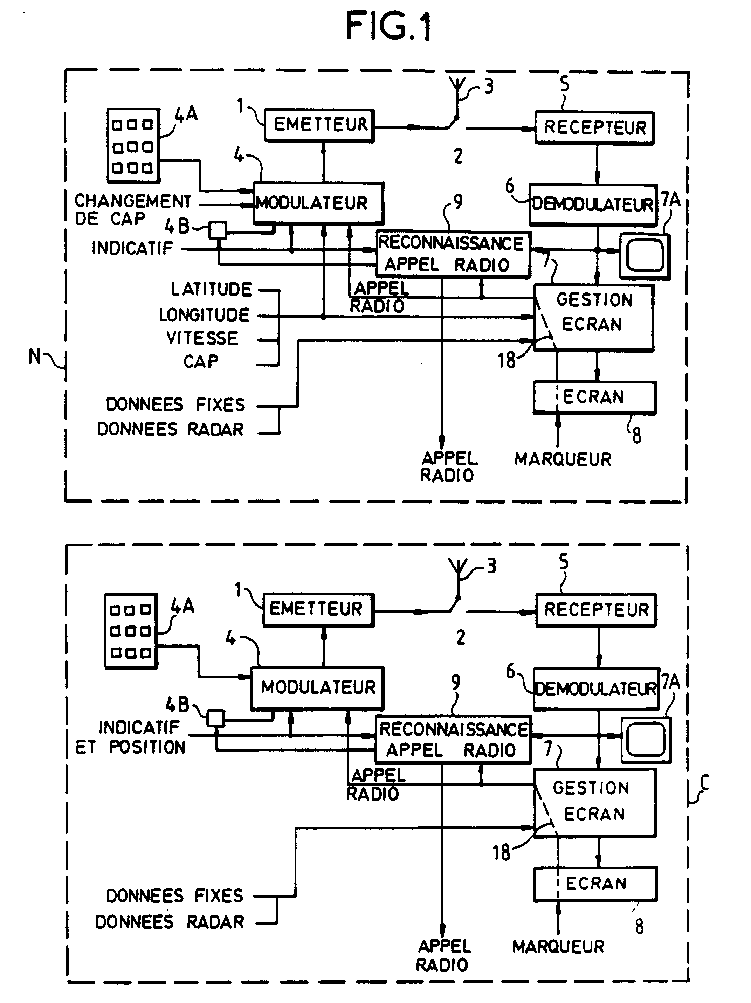

Chaque navire participant au système anticollision de l'invention est équipé d'un dispositif tel que celui schématiquement représenté en N sur la figure 1, et sera dénommé par la suite « navire équipé ».

Le dispositif N représenté à la figure 1 comporte un émetteur 1 émettant des messages de façon discontinue avec un taux de charge (défini comme le rapport de la durée d'émission à la durée d'arrêt) moyen très faible, de l'ordre de 10⁻⁴ à 10⁻⁵. La puissance et la fréquence d'émission sont choisies de façon à limiter la portée de l'émetteur 1 à quelques dizaines de kilomètres. La limitation peut être celle due à la courbure terrestre si l'on choisit une fréquence d'émission dont la propagation se fait en vue directe, par exemple une fréquence de la bande UHF (plusieurs centaines de MHz) ou au-delà, sans toutefois dépasser la bande X afin que la propagation reste pratiquement insensible aux conditions météorologiques. Le dispositif comprenant les éléments 1, 4, 5 et 6 peut également être un émetteur-récepteur VHF équipant ordinairement les navires, associé à un modem approprié. Dans ce cas, toutefois, le taux de charge sera un peu supérieur, à cause du faible débit des modems disponibles. La fréquence Fₒ de l'émetteur est la même pour tous les émetteurs et récepteurs du système.

L'émetteur 1 est relié via un commutateur 2 à une antenne 3 réalisée de façon a assurer une émission omnidirectionnelle dans le plan horizontal.

L'émetteur 1 est d'autre part relié à un modulateur 4. Ce modulateur 4 élabore un "mot" binaire regroupant l'ensemble des informations à émettre et le transpose en un signal modulant l'émetteur 1. La forme de modulation est de genre impulsionnel de façon à permettre l'absence totale d'émission en dehors du temps pendant lequel le message est transmis. Cependant, le type même de modulation de l'information n'est pas imposé par le procédé de l'invention : chaque élément binaire peut être codé selon l'une quelconque des techniques connues de codage, comme par exemple le codage en position d'impulsion, ou par saut de phase.

Le message émis comporte les informations suivantes :
- les coordonnées du navire, de préférence en latitude et en longitude, codées par exemple sur vingt-deux éléments binaires chacune. Ces coordonnées sont fournies par le système de radionavigation du navire. Les navires sont généralement équipés d'appareils de radionavigation leur donnant, en permanence, leur position géographique absolue de façon précise et fiable. La précision requise par le procédé anticollision de l'invention est de l'ordre de la centaine de mètres. Par exemple, le système de radionavigation connu sur l'appellation ''GPS'' satisfait à ces conditions ;
- la vitesse et le cap du navire, ces informations étant généralement disponibles sur tout navire, tout au moins sous forme analogique, qu'il suffit de convertir sous forme numérique. Ces informations peuvent être codées avec une précision suffisante par six et huit éléments binaires respectivement ;
- éventuellement (si la norme le prévoit), le changement de cap, codé par deux éléments binaires : virage à bâbord ou à tribord. Une telle information peut être fournie automatiquement par tout dispositif connu d'indication de sens de rotation, activé dès le début de la manoeuvre. La norme pourrait également prévoir une information plus riche et plus anticipée que la seule indication du changement de cap, à savoir la valeur du cap futur, mais cela nécessiterait son introduction manuelle (par clavier), et présenterait des risques d'oubli de la part de l'opérateur ;
- un indicatif d'appel ou code d'identification, qui est décrit plus en détail ci-dessous.

De façon avantageuse, ces informations sont précédées, selon une technique classique en transmission de messages, d'un préambule permettant d'initialiser certains circuits du récepteur. Egalement de façon avantageuse, ces informations sont complétées par des éléments binaires formant un symbole de fin de message, et, si on estime que la répétition permanente des messages n'est pas suffisante pour éliminer toutes les erreurs, on peut ajouter des éléments binaires de correction d'erreurs (éléments binaires de parité par exemple).

Comme précisé ci-dessus, si le navire est équipé d'un récepteur de radionavigation du type GPS, un tel récepteur fournit la plupart des informations citées ci-dessus avec une précision très supérieure à celle nécessaire au système de l'invention. Dans ce cas, on peut négliger, pour chaque information, les éléments binaires de plus faibles poids, superflus, pour ne conserver que ceux estimés significatifs et présentant la précision nécessaire et suffisante pour la mise en oeuvre du procédé de l'invention, comme précisé ci-dessus. Ainsi, la longueur du message émis est d'environ une centaine d'éléments binaires au moins. Si la bande passante affectée au système est de l'ordre de quelques mégahertz, le message est transmis en quelques dizaines de microsecondes.

Si chaque navire équipé émet un tel message avec une périodicité d'environ une seconde, la charge de trafic induite par un navire sur le système est comprise entre 10⁻⁴ et 10⁻⁵. Si par exemple une centaine de navires sont présents simultanément dans une même zone géographique (telle qu'un port), la charge en trafic du système n'est que de 10⁻² à 10⁻³, ce qui garantit une bonne probabilité de non brouillage mutuel des messages. Encore faut-il remarquer que l'on a choisi là un cas relativement défavorable, puisque les ordres de grandeur des temps de manoeuvre d'évitement des navires se comptent plutôt en minutes, et que l'on pourrait augmenter fortement la période de répétition des messages, et diminuer ainsi leur probabilité de brouillage mutuel. Ces remarques permettent en particulier d'envisager comme voie de communication un canal VHF standard et son modem associé. Les espacements entre canaux sont couramment de 25 ou 50 kHz, ce qui réduit sérieusement la vitesse de transmission par rapport aux chiffres évoqués précédemment. La durée d'un message sera alors de l'ordre de la dizaine de millisecondes. Une centaine de navires présents simultanément conduisent à une charge de 10% si la période moyenne est de 10 secondes, de 1,7 % si la période s'élève à la minute. Ces valeurs restent acceptables pour assurer une probabilité de non collision entre messages satisfaisante, surtout si l'on tient compte des adaptations qui vont être proposées ci-après.

De façon avantageuse, on rend aléatoire l'instant d'émission de chaque message, puisque le brouillage mutuel reste possible du fait de la non-synchronisation des émissions des différents navires. Ainsi, pour le premier exemple cité ci-dessus d'une période de répétition d'une seconde, cette valeur ne sera qu'une valeur statistique moyenne, la période vraie étant affectée d'une large dispersion. Il en résulte que tout message brouillé reçu d'un navire donné ne le sera pas de façon durable. En outre, la forte redondance des messages envoyés (pour une périodicité d'environ une seconde, un même message est répété plusieurs fois avant un changement significatif de cap et/ou de vitesse et/ou de position géographique) permet de négliger le message reçu brouillé.

Afin de pouvoir mieux adapter le dispositif de l'invention à des zones à très forte densité de navires et/ou de pouvoir utiliser des matériels standard moins performants (émetteur-récepteur VHF avec Modem, comme précisé ci-dessus), on peut réduire le nombre de messages émis par au moins une partie des participants. Pour cela, on lie la périodicité d'émission de leurs messages à la dynamique de la situation environnante. Ainsi, un navire lent et/ou isolé peut émettre moins fréquemment que la moyenne, alors qu'un navire rapide et/ou proche d'autres navires émet plus fréquemment. Les paramètres déterminant la fréquence de répétition d'émission des messages sont, pour chaque navire : sa vitesse propre, la vitesse de ses voisins, leur distance au navire en question, et éventuellement la manoeuvrabilité de ces navires. On peut combiner ces paramètres, en un paramètre unique qui est le temps théorique que mettrait le navire en question pour passer au plus près d'un des navires voisins s'il ne changeait ni son cap ni sa vitesse. La périodicité d'émission des messages peut ainsi varier en fonction de ces paramètres de quelques secondes à quelques minutes.

Les instants d'émission des messages sont, de préférence, aléatoires, afin d'éviter l'emploi d'un système complexe de gestion des appels. Le débit du canal commun unique du système étant limité, l'invention prévoit d'en optimiser l'utilisation en mettant en oeuvre une technique du type "slotted Aloha" et en faisant appel pour la synchronisation de l'ensemble du réseau par exemple aux signaux de synchronisation issus des signaux captés par les récepteurs GPS et émis par un satellite de localisation. La récupération des signaux de synchronisation étant une technique bien connue en soi, ne sera pas décrite ici. A partir de ces signaux de synchronisation, on découpe le temps en périodes de base égales, de durée légèrement supérieure à la durée des messages, augmentée le cas échéant du temps de propagation pour la portée maximale du système. Chaque participant place chacun de ses messages dans une période de base choisie au hasard. On réduit ainsi le risque de collision entre messages émis par des navires différents : soit ils sont situés dans des périodes différentes, soit ils se chevauchent totalement. Dans ce dernier cas, ils sont incompréhensibles et ne sont pas pris en compte, et la prochaine répétition de chacun d'eux se faisant également aléatoirement, leur probabilité de nouveau chevauchement est extrêmement faible.

Une autre possibilité, plus simple, d'acquisition de la synchronisation peut être la suivante : tout navire peut être considéré comme étant, soit à portée radioélectrique d'un autre participant ou d'un centre de contrôle, soit hors de portée. Pour le savoir, il suffit à ce navire, avant sa première émission, de rester à l'écoute pendant un temps au moins égal à ce qui aura été défini comme la période la plus longue du système. S'il n'a rien reçu pendant ce temps, il se sait isolé et commence à émettre sur la récurrence la plus basse (conformément à ce qui a été admis dans les critères définissant la périodicité sans synchronisation). Sa périodicité peut ensuite se modifier si l'environnement évolue (arrivée de participants à portée radioélectrique). Elle reste sans synchronisation tant que les messages reçus émanent de navires et non d'un centre de contrôle. La synchronisation n'a d'intérêt que dans les zones très denses, justifiant en général la présence d'un centre de contrôle.
Si certains des messages reçus émanent d'un centre de contrôle, leur origine sera prise comme synchronisation pour engager une procédure de type "slotted Aloha". Cette synchronisation est approximative, mais acceptable ici, car les temps de propagation sont faibles devant la durée des messages. Si une synchronisation absolue s'avérait nécessaire, elle pourrait facilement être réalisée. Il suffit à chaque participant de corriger la synchronisation grossière précédente du temps de propagation entre le centre de contrôle et lui-même. Ce temps est calculable à partir des positions géographiques des deux partenaires, connues

L'inverseur 2 relie, en dehors des courts laps de temps d'émission de l'émetteur 1, l'antenne 3 à un récepteur 5 calé sur la fréquence commune du système. Le récepteur 5 est relié à un démodulateur de données 6 extrayant les informations du signal reçu, en réalisant les opérations inverses de celles effectuées dans le modulateur 4. Ce modulateur est également relié à un dispositif 4A d'introduction de données, tel qu'un clavier.

Le démodulateur 6 est relié via un organe 7 de gestion d'écran à un écran de visualisation 8. Les éléments 7 et 8 peuvent par exemple être un micro-ordinateur et son moniteur de visualisation. Ces éléments 7 et 8 peuvent être complétés par un dispositif 7A d'affichage du code d'identification d'un ou de plusieurs navires environnants.

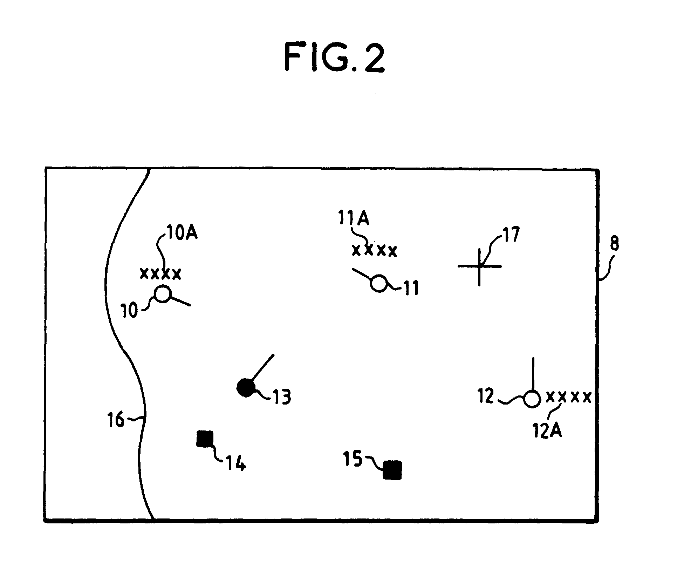

L'écran 8 a pour but de présenter à un opérateur l'ensemble de l'environnement de son navire par exploitation des informations reçues depuis les navires équipés environnants, ainsi que des informations reçues de ses propres équipements. On a représenté sur la figure 2 un exemple non limitatif d'informations pouvant être visualisées sur l'écran 8. L'affichage de ces informations peut se faire sous une forme analogue à celle de l'écran d'un radar panoramique.

Suivant l'exemple de la figure 2, l'écran 8 affiche sous forme de gros points lumineux les différents navires (10, 11, 12 par exemple), son propre navire (référencé 13) étant de couleur et/ou de forme et/ou de luminosité différentes de celles des autres navires. Par ailleurs, différentes formes et/ou couleurs de points peuvent correspondre à différents types de navires. Chaque point représentant un navire est prolongé par un segment de droite représentant le vecteur vitesse du navire correspondant. La longueur de ce vecteur est proportionnelle à la vitesse du navire, et son orientation correspond au cap de ce navire. De façon avantageuse, on peut également représenter par un symbole particulier, par exemple par un point ou un trait de couleur différente, l'information de changement de cap près du vecteur vitesse, à sa gauche ou à sa droite selon le sens du changement. La présentation générale de l'écran 8 peut être faite en situant le nord vers le haut de l'écran, mais on peut également, de façon avantageuse, faire correspondre le haut de l'écran avec la proue du navire, la ligne de foi de ce navire étant alors fixe. Le vecteur vitesse de chaque navire peut correspondre à une vitesse absolue, ou bien, selon une variante, à une vitesse relative par rapport à celle du navire 13 (dont le propre vecteur vitesse est alors nul), les différents vecteurs de vitesse relative des autres navires étant alors déterminés par composition vectorielle de leur vitesse propre et de celle du navire 13. Le point représentant le navire 13 peut aussi bien être situé au centre de l'écran qu'être décentré dans une direction opposée à son vecteur vitesse pour favoriser la "vue sur l'avant".

De façon avantageuse, on affiche près du point représentant chaque autre navire (10, 11, 12 sur la figure 2) son code d'identification (10A, 11A, 12A respectivement).

Egalement de façon avantageuse, chaque navire équipé comporte un radar lui permettant de détecter les navires environnants non équipés ou dont l'équipement est en panne, ainsi que les obstacles fixes (rochers, côtes, etc...). On a représenté sur la figure 2 deux échos 14, 15 représentant des navires non équipés ainsi que le profil 16 d'une côte. Les échos 14, 15 sont, de préférence, visualisés sous une forme et/ou une couleur différentes de celles des points 10 à 13 de façon à faire remarquer immédiatement à l'opérateur qu'ils correspondent à des navires non équipés ou dont l'équipement est en panne, et que l'absence de vecteur vitesse correspondant ne signifie pas une vitesse nulle de ces navires.

Toutes les transformées de coordonnées, de vecteurs et, le cas échéant, d'informations provenant du radar de bord, sont faites, de façon connue en soi, par l'organe de gestion 7, dont la réalisation est évidente pour l'homme de l'art à la lecture de la présente description.

En outre, des données fixes stockées dans une mémoire de masse peuvent également être fournies à l'organe de gestion 7. On peut ainsi représenter sur l'écran des données cartopraphiques telles que côte, bouées, phare, etc.

Selon une variante avantageuse de l'invention, un équipement de navire comporte en outre un circuit 9 de reconnaissance d'appel radio relié d'une part à la sortie du démodulateur 6, d'autre part à un clavier d'introduction de données (non représenté mais dont la fonction pourrait être assurée par 4A) sur lequel l'opérateur compose l'indicatif d'appel (qui est en fait, avantageusement, un code d'identification tel que décrit ci-dessous) du navire avec lequel il veut entrer en contact, cet indicatif étant également envoyé au modulateur 4 et incorporé au message périodiquement émis par l'émetteur 1. Le circuit 9 peut être un simple comparateur comparant, dans le navire appelé, l'indicatif reçu du navire appelant à son propre indicatif, et déclenchant en cas d'égalité, une alarme sonore et/ou visuelle. Bien entendu, le message reçu par le navire appelé contient l'indicatif du navire appelant, cet indicatif pouvant être affiché par l'écran 8 du navire appelé. Cet affichage peut se faire par exemple en clair (indicatif alpha-numérique) dans un coin de cet écran. Selon une variante avantageuse, au lieu de cet affichage ou en plus de cet affichage, un symbole peut apparaître à proximité du point (tel que l'un des points 10 à 12) figurant le navire appelant, ou bien ce point lui-même peut être modifié : le symbole peut être par exemple un cercle entourant le point figurant le navire appelant, et/oui ce point peut clignoter ou apparaître en surbrillance.

Selon une autre variante de l'invention, on associe l'organe 7 de gestion d'écran à un dispositif du genre "souris" communément utilisé avec les micro-ordinateurs, ce dispositif produisant sur l'écran 8 un marqueur mobile 17 ayant par exemple la forme d'une croix. Lorsque ce marqueur est superposé au symbole représentatif d'un navire que l'opérateur veut appeler par radio, cet opérateur manoeuvre le bouton de déclenchement (ou "click") de la "souris". Cet ordre est traité par l'organe 7 qui produit un indicatif d'appel correspondant (symbolisé par le trait interrompu 18) et l'envoie au modulateur 4. Pour produire cet indicatif, l'organe 7 mémorise les indicatifs reçus de tous les navires avoisinants (affichés sur l'écran 8), établit une relation entre le point sur lequel s'est arrêté le marqueur 17 et l'indicatif correspondant, et envoie cet indicatif. Ces fonctions assurées par l'organe 7 étant évidentes à réaliser pour l'homme de l'art, ne seront pas décrites plus en détail. Bien entendu, dans le navire appelé, ladite "souris" peut servir à acquitter l'appel, et éventuellement à déclencher une liaison radio. L'usage de la "souris" évite dans les deux navires (appelant et appelé) d'éventuelles erreurs dues à une mauvaise introduction d'indicatif par clavier.

Grâce à ladite souris ou au clavier 4A, l'opérateur d'un navire peut introduire et/ou modifier le "code d'identification" de son navire.

Ce code d'identification peut être quelconque. Il n'est pas nécessairement tiré d'un lexique, et ne permet pas d'identifier réellement son utilisateur. Ce code est un nombre binaire sans signification servant simplement d'adresse dans l'échange des messages tel que décrit en détails ci-dessous.

Toutefois, on peut avantageusement le conformer de la façon suivante :
- on peut attribuer quelques-uns des éléments binaires de ce nombre à l'identification du type de navire. Une telle information est utile pour la concertation des manoeuvres de navires proches les uns des autres.
- l'un des éléments binaires du nombre peut servir à indiquer si le code est tiré d'un lexique (certains navires peuvent désirer se faire identifier, ou en tout cas ne pas avoir de raisons de cacher leur identité) ou s'il n'a pas de signification propre.
- le reste du code, s'il n'est pas tiré d'un lexique, a un nombre d'éléments binaires suffisant pour que la probabilité d'utilisation fortuite de deux codes identiques dans une même zone soit négligeable, par exemple environ 16 éléments binaires.
- Selon une première variante, le choix du reste du code est laissé au gré de l'utilisateur. Cependant, une telle solution peut présenter des inconvénients : utilisation malveillante du code d'un autre utilisateur, et utilisation plus fréquente de certains codes simplifiés augmentant le risque de coïncidence de deux codes dans une même zone géographique.
- Selon une seconde variante avantageuse, le choix du reste du code se fait de façon autonome par un processeur 4B, relié au modulateur 4 et au circuit 9. Ce processeur 4B peut générer une séquence pseudo-aléatoire lors de sa mise en route.
- Si l'on veut éviter l'identification durable de l'utilisateur, le processeur 4B peut changer périodiquement ladite séquence pseudo-aléatoire. Le processeur peut effectuer ce changement en période d'inactivité (absence de toute réception pendant un grand nombre de périodes successives).
- Bien entendu, si le processeur 4B détecte l'utilisation fortuite par un autre utilisateur (détection via le circuit 9) du code envoyé par son émetteur 1, il peut commander le changement immédiat de son code, ou tout au moins de la séquence pseudo-aléatoire qu'il élabore.

Lorsqu'une communication est établie entre deux navires, et que chacun d'eux a reçu de l'autre le message décrit en détail en référence à la figure 2 et permettant d'afficher sur l'écran 8 les données correspondantes, ces navires peuvent échanger d'autres genres de messages remplaçant avantageusement une liaison en phonie. Ces autres genres de messages peuvent concerner en particulier les intentions de manoeuvres de ces deux navires. Pour diminuer l'encombrement du canal de transmission et pour faciliter la compréhension de ces messages, on les code d'après un lexique contenant la liste des messages (mots et/ou phrases) usuels pour tous les cas possibles de manoeuvres tels que : intention de garder le cap, de virer à bâbord ou à tribord, en attente de remorqueur, en panne, etc... Bien entendu, chaque opérateur de navire possède la traduction du lexique dans sa propre langue. On peut également prévoir un code pour "demande de transmission en phonie" dans le cas, relativement peu probable, où au moins l'un des opérateurs aurait à transmettre un message ne figurant pas dans le lexique. La fréquence à utiliser pour cette liaison en phonie peut aussi être indiquée. Bien entendu, trois navires ou plus peuvent participer en même temps à cet échange de messages codés : du fait de leur brièveté (ils peuvent par exemple ne comporter que huit éléments binaires, pour le codage de 256 messages différents) il y a peu de risques de simultanéité d'émission par plusieurs navires. Pour diminuer ces risques de simultanéité, les messages peuvent être répétés plusieurs fois, à des intervalles déterminés aléatoirement.

Les codes des messages codés peuvent être affichés sur le moniteur 7A ou sur l'écran 8. Selon une variante avantageuse, la traduction en clair de ces codes est affichée, grâce à un générateur de caractères dont la réalisation est évidente pour l'homme de l'art. De même, pour éviter d'avoir à feuilleter un lexique, on peut remplacer le clavier 4A par un dispositif d'affichage, par exemple du type à menus déroulants ou à icônes, affichant tous les messages disponibles, groupés par types. Un dispositif de pointage, par exemple du type à "souris", permet d'activer le message désiré, et d'envoyer aussitôt le code correspondant.

Le dispositif C également représenté sur la figure 1 est celui équipant le centre de contrôle. Ce dispositif C est semblable aux dispositifs N équipant les navires, à la différence principale qu'il ne reçoit pas d'informations sur ses propres latitude, longitude, vitesse et cap/changement de cap, puisqu'il est fixe. Sa position fixe, doit néanmoins être transmise. Bien entendu, son écran 7A peut être plus grand et avoir une meilleure résolution que ceux équipant les navires, puisqu'il doit pouvoir visualiser la totalité des symboles correspondant aux navires de sa zone de surveillance. Eventuellement, il peut être muni de plusieurs écrans visualisant chacun une partie de sa zone de surveillance. Enfin, l'antenne 3 du dispositif C peut être une antenne à forte directivité en site, afin de produire un faisceau plat sur l'horizon, et en azimut, afin de ne pas rayonner vers les terres.

Le centre de contrôle affiche sur son écran 8 les mêmes genres d'informations que les navires, à partir des informations qu'ils émettent. Bien entendu, ce centre étant fixe, ses propres coordonnées et l'orientation de l'image visualisée sur l'écran sont fixes. Le symbole le représentant est affiché sur l'écran en fonction de la conformation de la zone visualisée. Bien entendu, le vecteur vitesse de chaque navire affiché sur son écran ne peut l'être qu'en vitesse absolue.

Les messages émis par le centre de contrôle peuvent s'adresser à la totalité des navires qu'il surveille ou à certains d'entre eux ou à l'un d'entre eux seulement. De préférence, il a un accès privilégié au canal commun. A cet effet, les messages qu'il envoie, ou le premier d'une série, comportent par exemple un préambule de plusieurs bits. Ce préambule peut indiquer la nature des informations qui le suivent : soit un message "classique" analogue à ceux émis par les navires, soit un message d'intérêt général. Dans le premier cas, les informations comportent par exemple l'identification du centre, l'identification du ou des quelques navires déterminés à atteindre, et les ordres ou questions à leur adresser, éventuellement extraits d'un lexique, comme expliqué ci-dessus.

Dans le second cas, les informations émises peuvent par exemple être la diffusion d'une carte, des informations météo, des renseignements sur les activités portuaires, ... Dans la plupart des cas, ces messages d'intérêt général peuvent avoir une longueur très supérieure à celle des messages "classiques", et leur périodicité peut être très basse.

Afin de réduire les risques de chevauchement des messages d'intérêt général longs et des 'messages classiques des navires, l'invention prévoit d'attribuer aux messages d'intérêt général des possibilités d'émission plus grandes.

Selon un premier mode de réalisation, on fait précéder les messages d'intérêt général d'un ou de plusieurs messages "classiques" spécifiques indiquant qu'à partir d'un certain instant un message d'intérêt général sera diffusé pendant un laps de temps déterminé. Ces indications peuvent par exemple être tirées d'un lexique à la disposition de tous les navires. Ledit laps de temps est avantageusement un multiple de la période de base du "slotted Aloha". Tous les navires doivent alors s'abstenir d'émettre. Pour automatiser ce processus, on peut prévoir à cet effet dans les démodulateurs des navires un circuit de détection de ces messages classiques spécifiques et de décodage de la durée des messages d'intérêt général, ce circuit de détection inhibant leur émetteur ou empêchant le basculement de l'inverseur 2 vers l'émetteur pendant cette durée.

Selon un autre mode de réalisation de l'invention, une période parmi n du "slotted Aloha" est réservée à la station centrale, tous les navires faisant silence pendant cette période. Les navires venant de l'extérieur de la zone couverte par le centre de contrôle se synchronisent progressivement sur le "slotted Aloha" et restent en position d'écoute du réseau jusqu'à ce qu'ils reconnaissent la période réservée au centre de contrôle. Pour faciliter cette reconnaissance, le centre de contrôle peut par exemple, lorsqu'il n'a pas à émettre de messages, émettre un code particulier pendant ces périodes réservées.

Lorsque le réseau utilise un lexique, un des messages de ce lexique peut signifier que celui qui l'émet désire passer en communication vocale sur une fréquence prédéfinie ou précisée de façon codée dans ce message. Des communications vocales peu fréquentes et de courte durée peuvent être établies à l'aide d'un seul émetteur-récepteur, normalement destiné à transmettre les messages décrits ci-dessus, et momentanément occupé pour les communications vocales.

## Revendications

1. Procédé de contrôle de la navigation maritime, selon lequel chaque navire le mettant en oeuvre émet de façon répétitive, sur un canal commun à l'ensemble des navires concernés, des messages comportant des données relatives à sa position géographique absolue, à son cap et à sa vitesse, ainsi qu'un code d'identification quelconque servant d'adresse pour l'échange de messages, et reçoit des informations homologues des navires environnants, qu'il affiche par symboles sur un écran de type panoramique, le canal commun étant découpé dans le temps en périodes de base, caractérisé par le fait que la périodicité d'émission par chacun des navires est fonction d'au moins l'un des critères suivants : sa vitesse propre, la vitesse de ses voisins, la distance à ses voisins, sa manoeuvrabilité et celle de ses voisins, le temps à couvrir par ce navire avant le passage au plus près d'un navire voisin, que le contrôle est supervisé par un centre de contrôle qui est équipé de moyens de communication utilisant ledit canal commun, et affiche sur un écran toutes les informations qu'il reçoit de tous les navires concernés se trouvant dans sa zone de surveillance, ainsi que tous les obstacles qui s'y trouvent, et que l'une des périodes de base est régulièrement réservée au centre de contrôle, pour lui permettre de s'adresser à l'ensemble ou à une partie des navires concernés.

2. Procédé selon la revendication 1, caractérisé en ce que les périodes de base non réservées au centre de contrôle sont prises aléatoirement par les navires ayant à émettre.

3. Procédé selon l'une des revendications précédentes, caractérisé par le fait que sur le canal commun le temps est découpé en périodes de base égales synchronisées par un signal reçu par tous les participants, périodes de durée légèrement supérieure à la durée des messages des navires.

4. Procédé selon la revendication 3, caractérisé par le fait que le signal de synchronisation est obtenu à partir de signaux émis par un satellite de localisation.

5. Procédé selon l'une des revendications précédentes, caractérisé par le fait qu'avant d'émettre des messages communs adressés à l'ensemble des navires, le centre de contrôle émet des messages spécifiques indiquant qu'à partir d'un certain instant et pendant un temps déterminé il émettra ces messages communs.

6. Procédé selon la revendication 5, caractérisé par le fait que le centre de contrôle émet des messages communs pendant un multiple de la période de base.

## Patentansprüche

1. Steuerungsverfahren für die Schiffahrtsnavigation, bei dem jedes Schiff, das es benutzt, auf einem gemeinsamen Kanal in sich wiederholender Weise an alle betroffenen Schiffe Nachrichten, die Daten enthalten, die sich auf seine absolute geographische Position, auf seinen Kurs und auf seine Geschwindigkeit beziehen, sowie einen beliebigen Identifikationscode aussendet, der als Adresse für den Austausch von Nachrichten dient, und von den umgebenden Schiffen ebensolche Informationen empfängt, die es durch Symbole auf einem Panoramabildschirm anzeigt, wobei der gemeinsame Kanal zeitlich in Basisperioden eingeteilt ist, dadurch gekennzeichnet, daß die Periodizität des Sendens durch jedes der Schiffe von wenigstens einem der folgenden Kriterien abhängt: seiner eigenen Geschwindigkeit, der Geschwindigkeit seiner Nachbarn, dem Abstand zu seinen Nachbarn, seiner Manövrierbarkeit und der seiner Nachbarn, der Zeit, die von diesem Schiff benötigt wird, bevor es nächst einem benachbarten Schiff vorbeifährt, daß die Steuerung von einem Kontrollzentrum überwacht wird, das mit Kommunikationsmitteln versehen ist, die den gemeinsamen Kanal verwenden, und das auf einem Bildschirm alle Informationen anzeigt, die es von allen betroffenen Schiffen, die sich in seiner Überwachungszone befinden, empfängt, sowie alle Hindernisse anzeigt, die sich darin befinden, und daß eine der Basisperioden regelmäßig für das Kontrollzentrum reserviert ist, um ihm zu ermöglichen, sich an alle oder einen Teil der betroffenen Schiffe zu wenden.

2. Verfahren nach Anspruch 1, dadurch gekennzeichnet, daß die nicht für das Kontrollzentrum reservierten Basisperioden von den sendenden Schiffen in zufälliger Weise eingenommen werden.

3. Verfahren nach einem der vorstehenden Ansprüche, dadurch gekennzeichnet, daß die Zeit auf dem gemeinsamen Kanal in gleiche Basisperioden eingeteilt ist, die durch ein Signal synchronisiert sind, das von allen Teilnehmern empfangen wird, wobei die Perioden eine Dauer haben, die etwas größer ist als die Dauer der Nachrichten der Schiffe.

4. Verfahren nach Anspruch 3, dadurch gekennzeichnet, daß das Synchronisationssignal ausgehend von Signalen erhalten wird, die von einem Lokalisierungssatelliten ausgesendet werden.

5. Verfahren nach einem der vorstehenden Ansprüche, dadurch gekennzeichnet, daß vor dem Aussenden von an alle Schiffe adressierten gemeinsamen Nachrichten das Kontrollzentrum spezifische Nachrichten aussendet, die anzeigen, daß es von einem bestimmten Moment an und während einer vorbestimmten Zeit gemeinsame Nachrichten aussenden wird.

6. Verfahren nach Anspruch 5, dadurch gekennzeichnet, daß das Kontrollzentrum gemeinsame Nachrichten während eines Vielfachen der Basisperiode aussendet.

## Claims

1. Method for shipping control, whereby each ship that uses it repeatedly transmits, on a channel common to all the vessels concerned, messages which include data relating to its absolute geographical position, its course and speed, as well as some kind of identification code acting as an address for the exchange of messages, and receives homologous information from ships in the vicinity, which it displays by symbols on a panorama-type screen, the common channel being time-divided into base periods,
characterised in that the periodicity of transmission by each of the vessels is a function of at least one of the following criteria: its own speed, the speed of its neighbours, the distance from its neighbours, its manoeuvrability and that of its neighbours, and the time it will take this vessel to pass a neighbouring vessel on the closest possible course, that control is supervised by a control centre which is equipped with communication means which use said common channel, and displays on a screen all the information that it receives from all the vessels concerned that happen to be in its surveillance area, as well as all the obstacles situated therein, and that one of the base periods is regularly reserved for the control centre, in order to enable it to address all or some of the vessels concerned.

2. Method according to claim 1, characterised in that the base periods that are not reserved for the control centre are randomly taken by ships that need to transmit.

3. Method according to any of the preceding claims, characterised in that on the common channel the time is divided into equal base periods synchronised by a signal received by all the participants, which periods are slightly longer than the messages from the ships.

4. Method according to claim 3, characterised in that the synchronisation signal is obtained from signals transmitted by a positioning satellite.

5. Method according to any of the preceding claims, characterised in that before transmitting communal messages addressed to all ships, the control centre transmits specific messages indicating that from a certain instant and for a given length of time it will transmit communal messages.

6. Method according to claim 5, characterised in that the control centre transmits communal messages for a multiple of the base period.
